# EUROPEAN PATENT APPLICATION

(11) **EP 4 485 428 A1**
(43) Date of publication of application: **01.01.2025**
(21) Application number: 24184536.1
(22) Date of filing: 26.06.2024
(51) Int. Cl.: G09B 5/12, G09B 7/02

(54) **DISPLAY CONTROL APPARATUS, DISPLAY CONTROL METHOD, AND PROGRAM**

(30) Priority: 29.06.2023 JP 2023106577
(71) Applicant: Casio Computer Co., Ltd., Tokyo 151-8543 (JP)
(72) Inventor: ITO, Masahiro, Tokyo, 205-8555 (JP)
(74) Representative: Plougmann Vingtoft a/s

(57) **Abstract**

A display control apparatus includes a processor. The processor is configured to display on a display of a terminal operated by each member, display information of each of a plurality of members associated with information that specifies each member. The processor is also configured to, in a case where a specific operation by a specific member among the plurality of members is detected, based on the detected specific operation, restrict a display of the display information of the member operating the terminal or information other than the information that specifies the member on a display of the terminal operated by each member.

## Description

### TECHNICAL FIELD

The present invention relates to a display control apparatus, a display control method, and a program.

### DESCRIPTION OF RELATED ART

Conventionally, there has been known a learning support system in which a teacher and a student use a computer network system in order to share various pieces of information regarding assignments to be corrected.

For example, JP 2009-140018 A discloses an information processing system that transmits whiteboard data to be displayed on an electronic blackboard (whiteboard) and instruction information for restricting students' operations on the whiteboard data from a teacher's terminal apparatus to a student's terminal apparatus.

However, in the above-mentioned information processing system, the contents of the distributed whiteboard data can be sent to and displayed on student terminal devices. This makes it possible, for example, to include information created by students in the whiteboard data and display it. However, there is a concern that the student who created the information may be identified by other students.

### SUMMARY OF THE INVENTION

An object of the present invention is to protect information about each member by the operation of a member having a specific authority when information is displayed or shared among a plurality of members.

A display control apparatus of the present invention includes: a processor, wherein the processor is configured to, display on a display of a terminal operated by each member, display information of each of a plurality of members associated with information that specifies each member, and in a case where a specific operation by a specific member among the plurality of members is detected, based on the detected specific operation, restrict a display of the display information of the member operating the terminal or information other than the information that specifies the member on a display of the terminal operated by each member.

According to the present invention, it is possible to protect information about each member by the operation of a member having a specific authority when information is displayed or shared among a plurality of members.

### BRIEF DESCRIPTION OF DRAWINGS

FIG. 1 is a block diagram showing a schematic configuration of an information processing system according to an embodiment of the present disclosure.
FIG. 2A is a diagram showing a configuration of a user management table.
FIG. 2B is a diagram showing a configuration of a submission location management table.
FIG. 3 is a diagram showing a flow of an example of using a lesson support function.
FIG. 4A is a flowchart showing a submission screen display control process.
FIG. 4B is a flowchart showing a screen display setting change process.
FIG. 5A is a diagram showing an assignment management screen.
FIG. 5B is a diagram showing the assignment management screen.
FIG. 6A is a diagram showing the assignment management screen.
FIG. 6B is a diagram showing the assignment management screen.
FIG. 7A is a diagram showing an enlarged screen.
FIG. 7B is a diagram showing the enlarged screen.
FIG. 8A is a diagram showing a correction screen.
FIG. 8B is a diagram showing the correction screen.

### DETAILED DESCRIPTION

Hereinafter, embodiments of the present invention will be described in detail with reference to the drawings. However, the technical scope of the present invention is not limited to the illustrated examples.

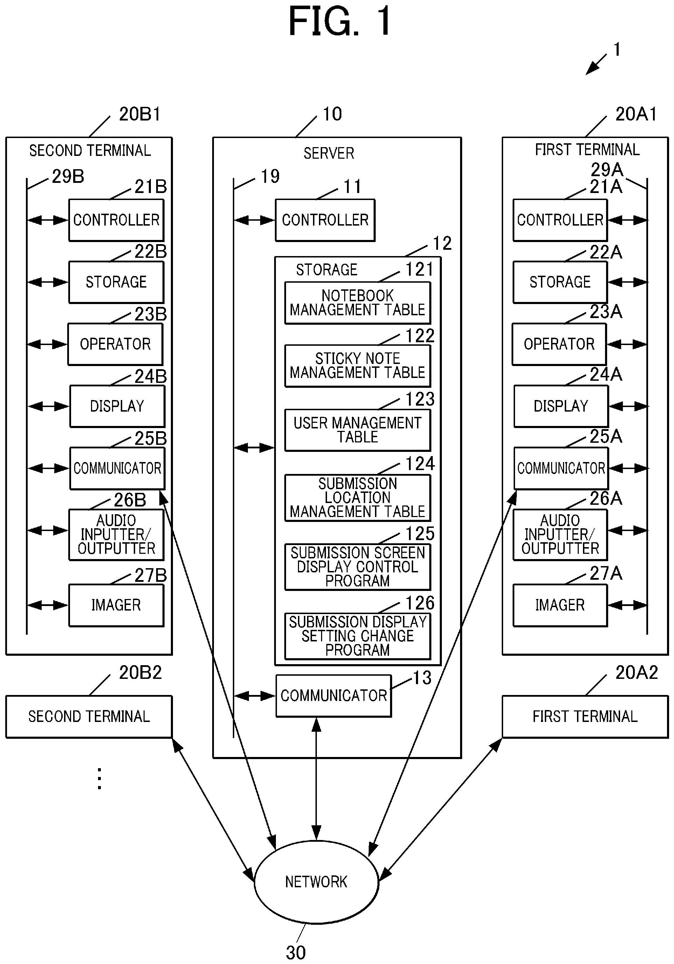

First, a configuration of an apparatus according to the present embodiment will be described with reference to FIG. 1. FIG. 1 is a block diagram showing a schematic configuration of an information processing system 1 according to an embodiment of the present disclosure. The information processing system 1 according to the present embodiment is assumed to be used by a teacher (instructor, learning leader) and a student (learner) during lessons at a school. In addition, schools include not only regular elementary schools, junior high schools, high schools, and universities, but also technical schools, cram schools, and preparatory schools.

As shown in FIG. 1, the information processing system 1 includes a server 10 serving as a display control apparatus, first terminals 20A1 and 20A2, and a plurality of second terminals 20B1, 20B2, and so on. The information processing system 1 may be configured to include a single first terminal. The server 10, the first terminals 20A1 and 20A2, and the second terminals 20B1, and so on are connected to each other via a network 30 so as to be able to communicate with each other. The network 30 may be, for example, the Internet, or a communication network such as a wireless LAN (Local Area Network), a wired LAN, a mobile communication network, or a combination of some or all of these.

The server 10 includes a controller 11 as a control means, a storage 12, and a communicator 13. Each unit of the server 10 are connected to each other via a system bus 19.

The controller 11 includes a CPU (Central Processing Unit), a RAM (Random Access Memory), and the like, and controls each unit of the server 10. Specifically, in the controller 11, the CPU reads a designated program from among a system program and various application programs stored in the storage 12, deploys it in the RAM, and performs various processing in cooperation with the deployed program. The controller 11 communicates with the first terminals 20A1, and 20A2, and the second terminals 20B1, 20B2, and so on via the communicator 13. For example, the controller 11 receives operation information input through operation of the first terminals 20A1, and 20A2, the second terminals 20B1, 20B2, and so on. Furthermore, the controller 11 transmits display information to be displayed on the first terminals 20A1, and 20A2, and the second terminals 20B1, 20B2, and so on and controls the devices so that the information is displayed.

The storage 12 is composed of a hard disk drive (HDD), a solid state drive (SSD), an electrically erasable programmable read-only memory (EEPROM), etc. The storage 12 stores various programs, such as system programs and application programs, executed by the controller 11, and various data required for executing the various programs. Specifically, the storage 12 stores a notebook management table 121, a sticky note management table 122, a user management table 123, and a submission location management table 124, which will be described later, a submission screen display control program 125 for executing a submission screen display control process, which will be described later, and a screen display setting change program 126 for executing a screen display setting change process, which will be described later. The notebook is a notebook-shaped display region in which various sticky notes can be placed at any position as study information. The data of the notebook is regarded as notebook data. The sticky note is an electronic sticky note serving as a display object that includes information that the user wants to write down. The data of the sticky note is regarded as sticky note data. The communicator 13 includes a NIC (Network Interface Card) and the like, and accesses to the network 30 in order to perform electrical communication with external devices.

The first terminals 20A1 and 20A2 are terminal apparatuses used by teachers. As an example, it is assumed that a first teacher (Taro SUZUKI), who is a homeroom teacher of a certain class in a school, uses the first terminal 20A1, and a second teacher (Hanako SATO), who is an assistant homeroom teacher of the same class, uses the first terminal 20A2. Here, the first terminal 20A1 will be described as a representative example, but the first terminal 20A2 has a similar configuration.

The first terminal 20A1 is a personal computer (PC), a smartphone, or the like. The first terminal 20A1 includes a controller 21A, a storage 22A, an operator 23A, a display 24A, a communicator 25A, an audio inputter/outputter 26A, and an imager 27A. The above units are connected to each other via a system bus 29A.

The controller 21A includes a CPU, a RAM, and the like, and controls each unit of the first terminal 20A1. For example, the controller 21A executes a browser and a learning support application program (learning support app) that runs on the browser, and causes operation information based on a user's operation on the operator 23A to be transmitted to the server 10 via the communicator 25A, and causes display information received from the server 10 to be displayed on the display 24A.

The storage 22A is composed of a HDD, a SSD, an EEPROM, and the like. The storage 22A stores various programs such as a browser executed by the controller 21A and various data. The operator 23A has operation elements such as a keyboard, a touch screen, and a mouse, for example. The operator 23A accepts operation input by the user and outputs the operation information to the controller 21A.

The display 24A includes a Liquid Crystal Display (LCD), an Electro-Luminescence (EL) display, and the like, and display information instructed from the controller 21A is displayed. The communicator 25A includes at least one of a wired communication module such as a NIC and a wireless communication module, and accesses the network 30 to perform electrical communication with external devices.

The audio inputter/outputter 26A includes an audio inputter such as a microphone, and an audio outputter such as an amplifier and a speaker. The audio inputter/outputter 26A generates audio data based on a user's voice or the like by using the audio inputter, and outputs the audio data to the controller 21A. Furthermore, the audio inputter/outputter 26A outputs audio through the audio outputter based on audio data input from the controller 21A. The imager 27A is a digital camera including an imaging element such as a CCD (Charge Coupled Device), CMOS (Complementary Metal Oxide Semiconductor) or the like, and an optical system. The imager 27A captures an image of a subject such as a user, generates image data of a still image or a moving image, and outputs the image data to the controller 21A.

The second terminals 20B1, 20B2, and so on are terminal apparatuses used by the students. As an example, it is assumed that each student in the class of the first teacher and the second teacher uses the second terminals 20B1, 20B2, and so on respectively. Specifically, the first student in the class (Ichiro YAMAMOTO) uses the second terminal 20B1, the second student (Jiro TANAKA) in the class uses the second terminal 20B2, and the third student (Mitsuko NAKAMURA) in the class use the second terminal 20B3 (not shown), and so on. These teachers and students are to attend the designated lessons for the class they belong to.

The second terminals 20B1, 20B2, and so on have the same configuration as the first terminals 20A1 and 20A2. The controller 21B, storage 22B, operator 23B, display 24B, communicator 25B, audio inputter/outputter 26B, imager 27B, and system bus 29B of the second terminal 20B1 are configured in the same manner as the controller 21A, storage 22A, operator 23A, display 24A, communicator 25A, audio inputter/outputter 26A, imager 27A, and system bus 29A of the first terminal 20A1, respectively. Therefore, the description of the above will be omitted.

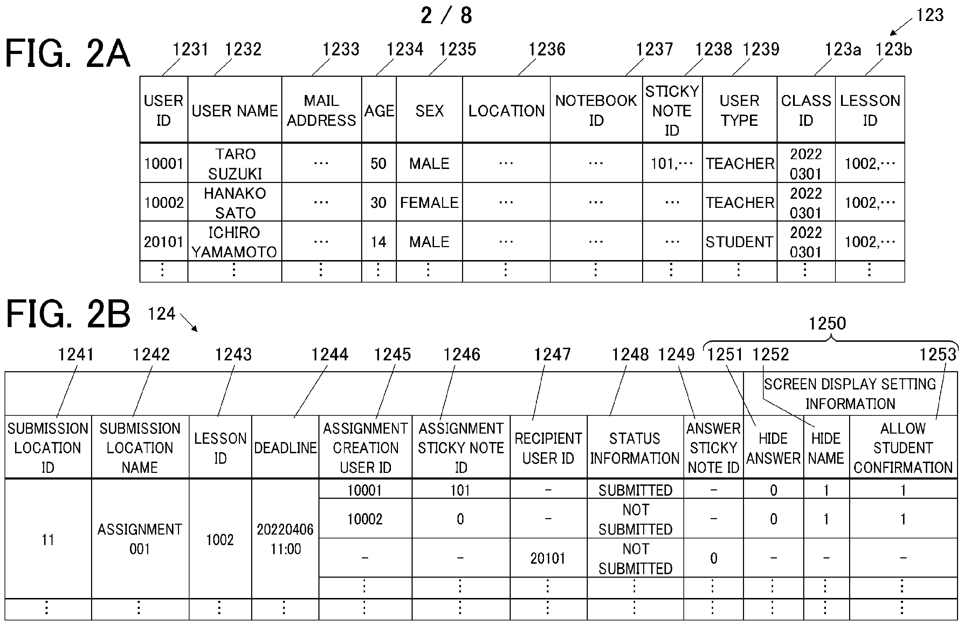

Next, the information stored in the storage 12 of the server 10 will be described with reference to FIG. 2A and FIG. 2B. FIG. 2A is a diagram showing a configuration of the user management table 123. FIG. 2B is a diagram showing a configuration of the submission location management table 124.

The configurations of the notebook management table 121 and the sticky note management table 122 stored in the storage 12 are similar to those described in JP Patent Application No. 2023-000130, and therefore will not be described here. However, the notebook management table 121 according to the present embodiment includes a lesson ID. The lesson ID is identification information of the lesson corresponded to the notebook.

As shown in FIG. 2A, the user management table 123 is a table for managing information related to users (teachers, students) who use the information processing services provided by the information processing system 1. The user management table 123 includes columns such as user ID 1231, user name 1232, email address 1233, age 1234, sex 1235, location 1236, notebook ID 1237, sticky note ID 1238, user type 1239, class ID 123a, and lesson ID 123b. The user ID 1231 is identification information of each user. The user name 1232 is the name of the user corresponding to the user ID 1231. The email address 1233, age 1234, sex 1235, and location 1236 are attribute information of the user with the user ID 1231, such as the email address, age, sex, and location. The notebook ID 1237 is identification information of the notebook data created by the user having the user ID 1231. The sticky note ID 1238 is identification information of the sticky note data created by the user having the user ID 1231. The user type 1239 is the type of the user of the user ID 1231 showing whether the user is a student or a teacher. The class ID 123a is identification information of a class at a school to which the user with the user ID 1231 belongs. The lesson ID 123b is identification information of a lesson to be attended in which the user with the user ID 1231 is registered.

As shown in FIG. 2B, the submission location management table is a table for managing information related to the submission location of submitted material in response to an assignment created by a user in the learning support app. The assignment and the submitted material are both sticky note data. The submission location management table includes columns such as submission location ID 1241, submission location name 1242, lesson ID 1243, deadline 1244, assignment creating user ID 1245, assignment sticky note ID 1246, recipient user ID 1247, status information 1248, answer sticky note ID 1249, and screen display setting information 1250. The submission location ID 1241 is identification information for each submission location. The submission location name 1242 is the name of the submission location of the submission location ID 1241. The lesson ID 1243 is identification information of the lesson corresponding to the submission location of the submission location ID 1241. The deadline 1244 is a deadline for submitting an answer at the submission location identified by the submission location ID 1241. The assignment creating user ID 1245 is identification information of the user (teacher) who created the assignment (sticky note data) for the submission location identified by the submission location ID 1241. In addition, since a second teacher may create the assignment, the assignment creating user ID 1245 includes teachers who have not created the assignment. The assignment sticky note ID 1246 is identification information of sticky note data created as an assignment by the teacher with the assignment creating user ID 1245. The recipient user ID 1247 is identification information of at least one user (student who is to create an answer to the assignment) designated as a recipient of the assignment of the assignment sticky note ID 1246. The status information 1248 is information indicating, for each recipient user ID 1247, whether the sticky note data of the assignment at the submission location with the submission location ID 1241 has been downloaded and the download date and time, and the submission status and submission date and time of the sticky note data of the answer (assignment). The answer sticky note ID 1249 is identification information of the sticky note data of the answer created by the user (student) having the recipient user ID 1247.

The screen display setting information 1250 is a flag area associated with the submission location ID 1241 and the assignment creating user ID 1245 (teacher), and includes hide answer 1251, hide name 1252, and allow student confirmation 1253. The hide answer 1251 is flag information of on (=1) or off (=0) of a function for not displaying all sticky note data on the assignment management screen (described later) of the teacher's terminal when the function is on. The hide name 1252 is flag information of on or off of a function for not displaying names other than the user (viewer) on the assignment management screen of the teacher's and student's terminals. The allow student confirmation 1253 is flag information for on or off of a function for not displaying sticky note data from anyone other than the viewer (student) of the assignment management screen on the student's terminal. The hide answer 1251 is information independent among multiple teachers. The hide name 1252 and allow student confirmation 1253 are information shared among multiple teachers. The storage 12 also stores various data such as created sticky note data, notebook data, a dictionary database, and the like. The dictionary data stores dictionary data for Japanese dictionaries and the like that associates entry words (words) with explanatory text such as the part of speech, meaning, etymology, and usage examples of the entry words.

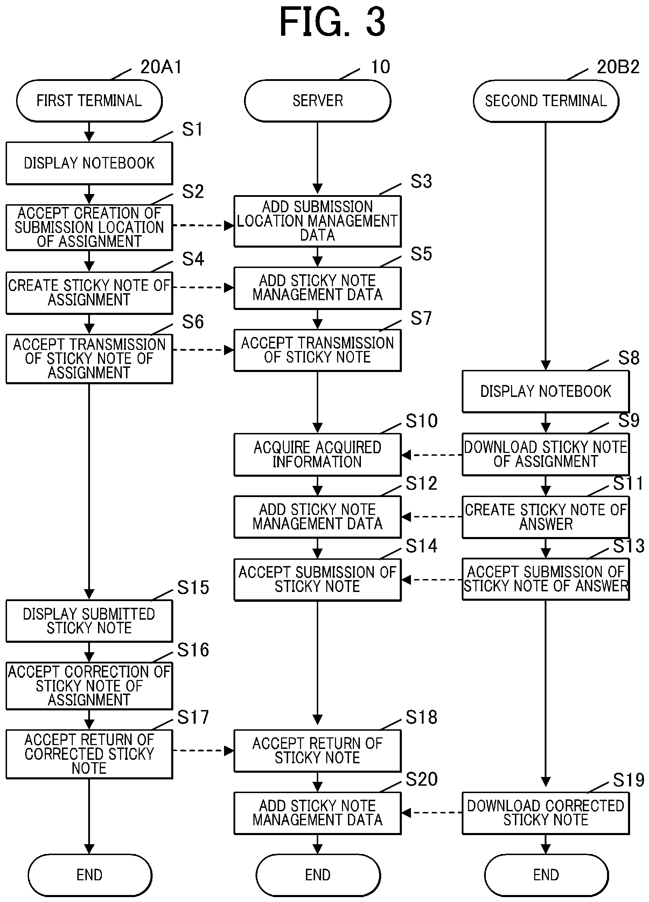

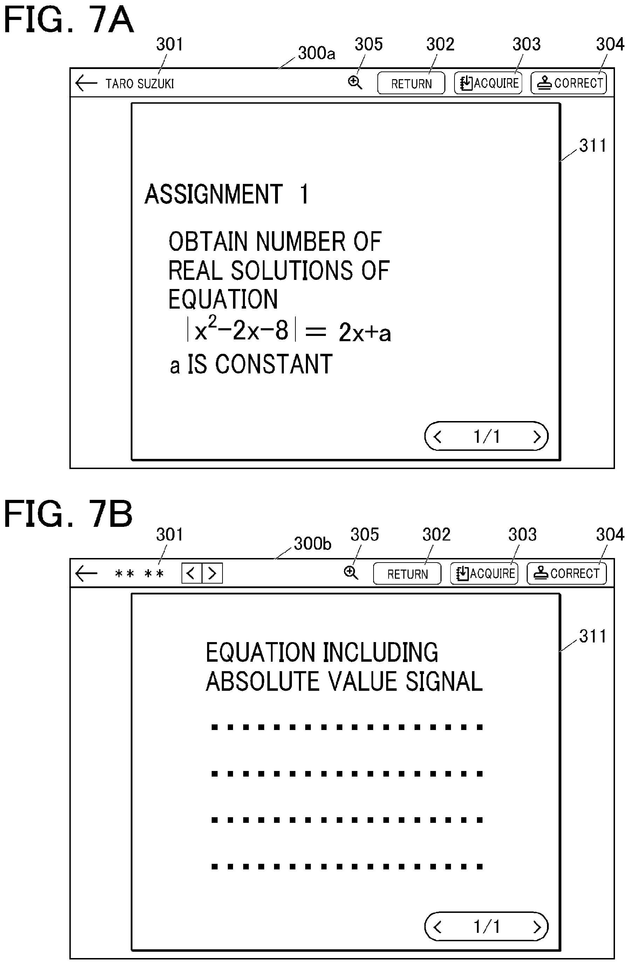

Next, the lesson support function (submission function) included in the information processing system 1 will be described with reference to FIG. 3. FIG. 3 is a diagram showing a flow of an example of using the lesson support function. This lesson support function is similar to the processing shown in FIG. 7 of Japanese Patent Application No. 2023-029904, and therefore a detailed description thereof will be omitted. Teachers and students can use the lesson support function regarding the lesson at school to share various information about assignments regarding the lessons, submissions or corrections of the submitted material, etc. Here, the first terminal 20A1 of the first teacher and the second terminal 20B2 of the second student are used, and an example is given regarding submission of the sticky note data of the assignment and answer regarding a specific lesson in which the first teacher and the second student are registered. However, the teachers and students who are registered to the lesson may each be two or more.

In advance, the controller 21A of the first terminal 20A1 executes the learning support app, accepts operational input of a user ID and password from the user (here, the first teacher) via the operator 23A, and transmits the user ID and password to the server 10 via the communicator 25A. The controller 11 of the server 10 receives the user ID and password via the communicator 13, performs login authentication, and the first teacher logs in. Similarly, it is assumed that the second student is also logged in to the second terminal 20B2.

First, the controller 11 of the server 10 controls the display 24A of the first terminal 20A1 used by the first teacher to display a notebook screen selected in accordance with a target lesson (step S1). Then, the controller 11 accepts creation of the submission location ID, submission location name, and deadline for the assignment from the first teacher via the operator 23A (step S2). The controller 11 associates the submission location ID 1241, submission location name 1242, deadline 1244, etc. entered by the first teacher with the lesson ID 1243 and assignment creating user ID 1245, and adds the above items to the submission location management table 124 as submission location management data (step S3). A row for the second teacher who does not create the assignment is also added to the submission location management table 124.

Then, the controller 11 accepts input of the creation of the sticky note for the assignment from the first teacher via the operator 23A, and creates the sticky note data of the assignment (step S4). When the first teacher inputs a save operation via the operator 23A, the controller 11 stores the generated sticky note data for the assignment in the storage 12 and adds a new row of sticky note management data to the sticky note management table 122 (step S5).

Then, the controller 11 accepts input to transmit the sticky note data for the assignment from the first teacher via the operator 23A to the designated recipient user ID (step S6) . The controller 11 accepts the request to transmit the sticky note data for the assignment to the destination specified in step S6, and stores the assignment creating user ID 1245, assignment sticky note ID 1246, and recipient user ID 1247 in the submission location management table 124 in association with the submission location ID 1241 (step S7).

Furthermore, the controller 11 controls the display 24B of the second terminal 20B2 having the recipient user ID 1247 to display the notebook screen (step S8). Then, the controller 11 accepts an instruction to download the sticky note data for the assignment from the second student via the operator 23B. The controller 11 transmits the sticky note data for the assignment to the second terminal 20B2 and displays it on the display 24B (step S9). When the sticky note data is downloaded by the second student's operation, the controller 11 acquires acquired information indicating that the second student has acquired the sticky note data, associates it with the submission location ID 1241 and the recipient user ID 1247, and stores it in the submission location management table 124 as status information 1248 (step S10).

Then, the controller 11 accepts input of the creation of the sticky note data for the answer to the assignment from the second student via the operator 23B, and creates the sticky note data of the answer (step S11). When the second student inputs a save operation via the operator 23B, the controller 11 stores the sticky note data for the answer in the storage 12 and adds a new row of sticky note management data to the sticky note management table 122 (step S12).

Then, the controller 11 accepts input of the submission of the sticky note data for the answer from the second student via the operator 23B (step S13). When the controller 11 receives the operation information of the submission by the second student from the second terminal 20B2, the controller 11 accepts the submission of the sticky note data for the answer to the submission location of the assignment, associates the data with the submission location ID 1241 and the recipient user ID 1247, and stores the status that the submission is finished and the answer sticky note ID as status information 1248 and answer sticky note ID 1249 in the submission location management table 124 (step S14).

The controller 11 also controls the display 24A of the first terminal 20A1 to display an assignment management screen including a list of sticky note data of answers submitted by students based on the submission location management table 124 and the like (step S15). The controller 11 accepts input of the corrections of the submitted sticky note data for the answer from the first teacher via the operator 23A (step S16).

Then, the controller 11 accepts input to return the corrected sticky note data in the server 10 to the students from the first teacher via the operator 23A (step S17). When the controller 11 receives the operation information to return the corrected sticky note data from the first terminal 20A1, the controller 11 accepts the return of the corrected sticky note data (step S18).

Then, the controller 11 accepts an input to download the corrected sticky note data from the second student via the operator 23B. The controller 11 transmits the corrected sticky note data to the second terminal 20B2 and displays the data on the display 24B (step S19). When the second student downloads the sticky note, the controller 11 adds a new row of sticky note management data to the sticky note management table (step S20) .

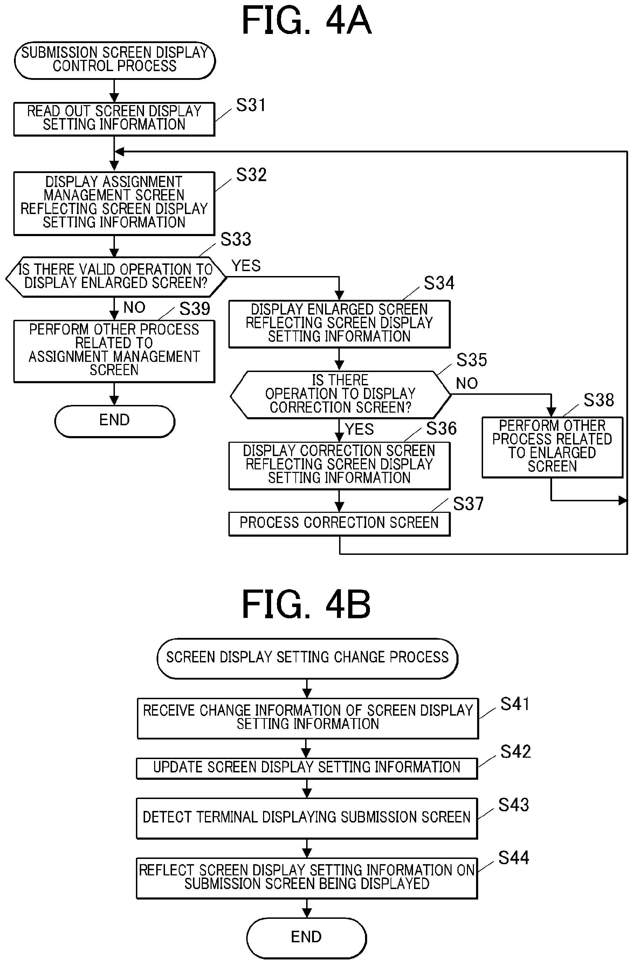

Next, the process of displaying the assignment management screen, the enlarged screen, and the correction screen in the lesson support function will be described with reference to FIG. 4A to FIG. 8B. As a premise, it is assumed that the first teacher, the second teacher, the first student, the second student, and the third student are registered in the target lesson performed in the first teacher and the second teacher's class. The processing of the lesson support function in FIG. 3 is executed for this lesson. The assignment management screen is a screen that displays a list of the registration status of the teacher's assignment sticky note data and the submission status of the students' answer sticky note data using a sticky note thumbnail, and is displayed on both the teacher's and student's terminals. The assignment management screen is displayed, for example, on the teacher's first terminal by transitioning from the notebook screen in step S1 of the lesson support function, or in step S15, and on the student's second terminal by transitioning from the notebook screen in step S8 of the lesson support function.

The enlarged screen is a screen to which the screen transitions from the assignment management screen being displayed for the teacher or student. The enlarged screen displays an enlarged view of the sticky note data of the sticky note thumbnail for the teacher or student displayed in a list on the assignment management screen. The correction screen is a screen to which the screen transitions from the assignment management screen being displayed for the teacher. The correction screen displays information for correcting the sticky note data of the student displayed in a list on the assignment management screen.

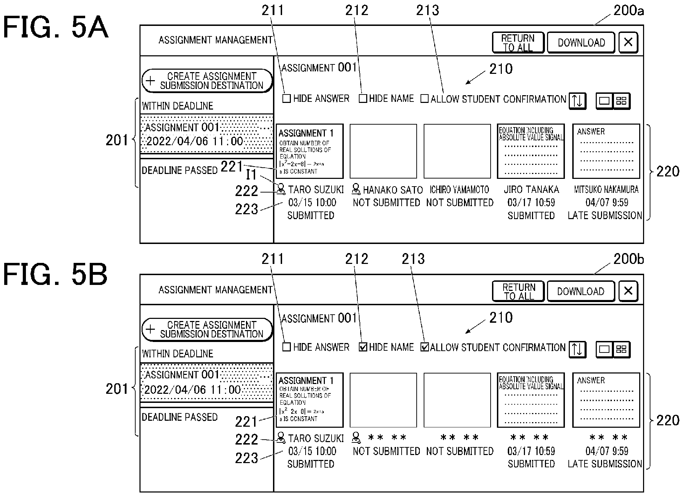

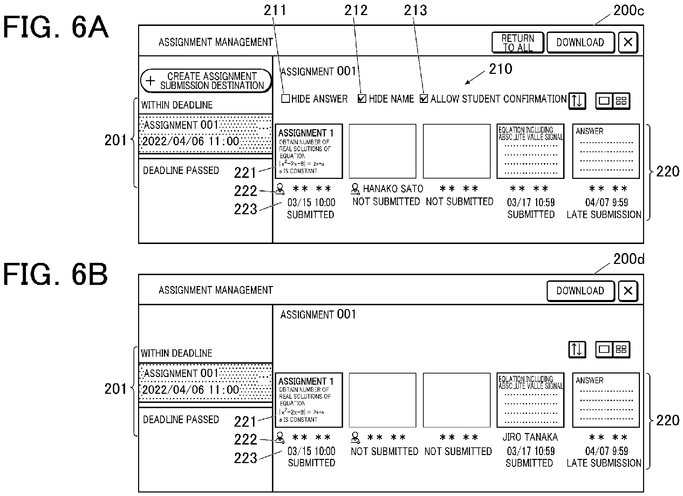

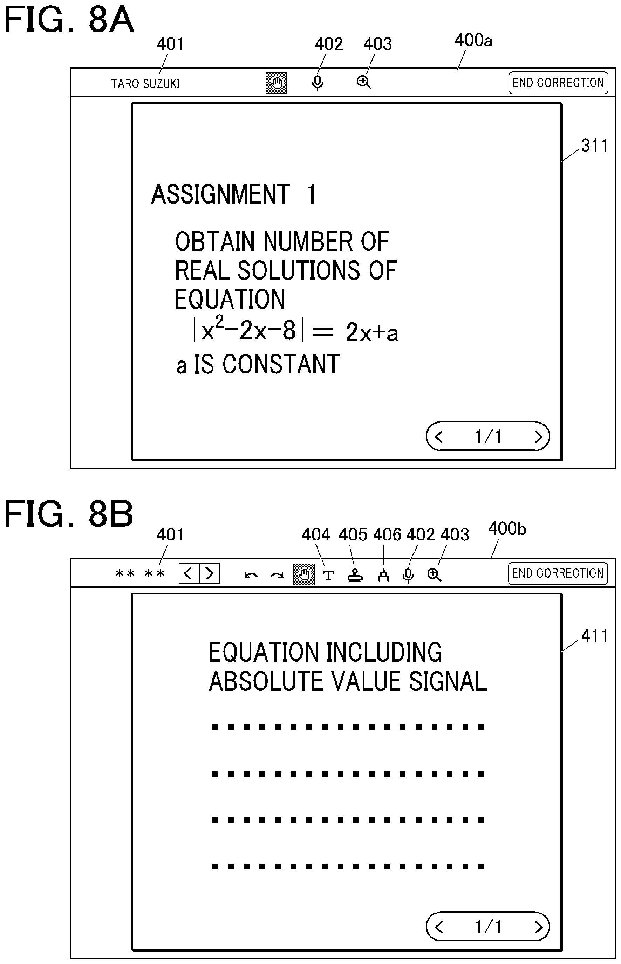

The submission screen display control process and the screen display setting change process will be described with reference to FIG. 4A to FIG. 8B. FIG. 4A is a flowchart showing the submission screen display control process. FIG. 4B is a flowchart showing the screen display setting change process. FIG. 5A is a diagram showing the assignment management screen 200a. FIG. 5B is a diagram showing the assignment management screen 200b. FIG. 6A is a diagram showing the assignment management screen 200c. FIG. 6B is a diagram showing the assignment management screen 200d. FIG. 7A is a diagram showing the enlarged screen 300a. FIG. 7B is a diagram showing the enlarged screen 300b. FIG. 8A is a diagram showing the correction screen 400a. FIG. 8B is a diagram showing the correction screen 400b.

Next, the submission screen display control process in which the server 10 displays the assignment management screen, the enlarged screen, and the correction screen on the terminal will be described with reference to FIG. 4A and FIG. 5A to FIG. 8B. The controller 11 accepts an input of a request to display the screen management screen from the user (teacher or student) via the operator 23A or 23B of any of the logged-in first terminals 20A1, 20A2, or second terminals 20B1, and so on. The controller 11 is triggered by the request to execute a submission screen display control process in accordance with the submission screen display control program 125 stored in the storage 12.

First, the controller 11 reads the submission location management table 124, the user management table 123, and the sticky note management table 122, each including the screen display setting information 1250, from the storage 12 (step S31). Then, the controller 11 generates the assignment management screen data for displaying the assignment management screen based on the information read in step S31, and displays it on the display 24A or 24B of the requesting terminal (step S32). Specifically, the assignment management screen is a screen that reflects the screen display setting information 1250.

As shown in FIG. 5A, for example, the assignment management screen 200a is displayed on the first terminal 20A1 for the first teacher (Taro SUZUKI). Here, the assignment management screen 200a is an example screen in which the first teacher has registered (submitted) sticky note data for an assignment 001 in a class consisting of the first teacher, the second teacher (Hanako SATO), the first student (Ichiro YAMAMOTO), the second student (Jiro TANAKA), and the third student (Mitsuko NAKAMURA) . The sticky note data for the assignment 001 has been downloaded to the second terminals of the first to third students. The second teacher has not yet submitted the sticky note data for the assignment. The first student has not yet submitted his/her answer sticky note data even though the deadline has passed. The second student has already submitted the answer sticky note data within the deadline. The third student submitted the answer sticky note data after the deadline and is in a submission late state.

The assignment management screen 200a includes a deadline display region 201, a setting region 210, and a sticky note list display region 220. The setting region 210 includes check boxes 211, 212, and 213. The check box 211 is an operation element that accepts an input of whether to turn on or off a "hide answer" function. The check box 212 is an operation element that accepts an input of whether to turn on or off a "hide name" function. The check box 213 is an operation element that accepts an input of whether to turn on or off an "allow student confirmation" function.

The sticky note list display region 220 includes a sticky note thumbnail 221, a name 222, and status information 223. The sticky note thumbnail 221 is a thumbnail of the sticky note of the sticky note data of the assignment or answer created by each teacher and each student. The sticky note thumbnail 221 accepts a click input for transition to an enlarged screen of the sticky note data corresponding to the thumbnail. The name 222 is the name of each user corresponding to the sticky note thumbnail 221. Regarding the name 222, the teacher's name is accompanied by a teacher icon I1. Similarly, the student's name is not marked with the teacher icon I1. The status information 223 is information indicating the date and time of submission and the submission status of the sticky note data corresponding to the sticky note thumbnail 221.

In the screen display setting information 1250 that has been read out, the flag areas that correspond to the assignment creating user ID 1245 of the requesting first teacher, specifically, hide answer 1251, hide name 1252, and allow student confirmation 1253, are all set to 0 as the default state. Therefore, the check boxes 211, 212, and 213 are turned off in the assignment management screen 200a. Therefore, in the sticky note thumbnail 221, the sticky note thumbnails of the sticky note data submitted by the first teacher, the second student, and the third student are displayed, and the display region of users who have not submitted sticky note data is not displayed (left blank). The name 222 displays the names of all the users from the first teacher to the third student based on the user name 1232 corresponding to the assignment creating user ID 1245 and the recipient user ID 1247.

In the state read out in step S31, when the operation of the first teacher is detected, and hide name 1252 is set to 1 and allow student confirmation 1253 is set to 1, the assignment management screen 200b shown in FIG. 5B is displayed on the display 24A of the first terminal 20A1 of the first teacher who made the request. The assignment management screen 200b is similar to the assignment management screen 200a, but by detecting an operation on a check box by the first teacher, the check boxes 212 and 213 are turned on. Then, on the assignment management screen 200b, since hide name 1252 is turned on, the name of the first teacher who is the viewer is displayed in name 222, and the other names are hidden by obscured characters such as "*" (asterisk). The regions of users who have not submitted sticky note data will not be displayed (blank).

In addition, due to the request originating from the first terminal 20A2 of the second teacher, and due to detecting the operation of the second teacher, when hide name 1252 corresponding to the second teacher's assignment creating user ID 1245 is set to 1 and allow student confirmation 1253 is set to on (=1), the assignment management screen 200c shown in FIG. 6A is displayed on the display 24A of the first terminal 20A2. The assignment management screen 200c is similar to the assignment management screen 200a, but the check boxes 212 and 213 are on. On the assignment management screen 200c, since hide name 1252 is set to 1, the name of the second teacher who is the viewer is displayed in name 222, and the other names are hidden by obscured characters such as "*" (asterisk). When hide answer 1251 is turned on (=1) by the checkbox 211, the sticky note thumbnails of all sticky note data in the sticky note thumbnail 221 is not displayed (displayed as not displayed or displayed as blank space) on the assignment management screens 200b, 200c, etc. of the teacher who turned on the checkbox 211. This setting is not reflected on the teacher's side if the check box 211 is not on.

When the request originates from the second terminal 20B2 of the second student, hide name 1252 corresponding to the assignment creating user ID 1245 of the teacher (first teacher or second teacher) for the lesson ID 1243 of the second student, and allow student confirmation 1253 is set to on (=1), the assignment management screen 200d shown in FIG. 6B is displayed on the display 24B of the second student's second terminal 20B2. The assignment management screen 200d is similar to the assignment management screen 200a, but there are no check boxes 211, 212 and 213. Further, on the assignment management screen 200c, since hide name 1252 is set to on (=1) on the teacher's side, the name of the second student who is the viewer is displayed in name 222, and the other names are hidden by obscured characters such as "*" (asterisk). When allow student confirmation 1253 on the teacher's side is turned off (=0) by the checkbox 213, the sticky note thumbnail of the sticky note data of the viewer (student) is displayed and the sticky note thumbnails of all other sticky note data is not displayed (displayed as not displayed or displayed as blank space) on the assignment management screen 200d on the student side.

Returning to FIG. 4A, the controller 11 determines whether or not there is a valid operation input for enlarged display from the user (teacher or student) via the operator 23A or 23B (step S33). The valid operation input for enlarged display is a click input on the sticky note thumbnail 221 that is displayed and not hidden. If there is a valid operation input for enlarged display (step S33; YES), the controller 11 reads out sticky note data corresponding to the click input from the storage 12, generates enlarged screen data in which the sticky note of the sticky note data is enlarged, and displays the data on the requesting display 24A or 24B (step S34). In step S34, for example, when the first teacher clicks on the sticky note thumbnail 221 of the first teacher on the assignment management screen 200b, the enlarged screen 300a shown in FIG. 7A is displayed on the display 24A of the first terminal 20A1 of the first teacher.

The enlarged screen 300a has a name 301, a return button 302, an acquire button 303, a correction button 304, an enlarge button 305, and a sticky note display region 311. The name 301 is the name of the user who created the sticky note data currently displayed in the sticky note display region 311, based on the user name 1232 corresponding to the assignment creating user ID 1245 or the recipient user ID 1247. When hide name 1252 is turned on (=1), the name 301 displays the name of the first teacher, since the screen is an enlarged screen of the sticky note data created by the first teacher himself. The return button 302 is a button for accepting an instruction input for returning the sticky note data in the sticky note display region 311, and is input, for example, in step S18 of the lesson support function. The acquire button 303 is a button for accepting an instruction input for downloading the sticky note data in the sticky note display region 311. The correction button 304 is a button for accepting an instruction input for returning the sticky note data in the sticky note display region 311, and is input, for example, in step S16 of the lesson support function. The enlarge button 305 is a button for accepting an instruction input for enlarging/reducing the sticky note in the sticky note display region 311. The sticky note display region 311 is a display region for an enlarged image of the sticky note of the sticky note data corresponding to the sticky note thumbnail 221 that has been clicked on the assignment management screen.

In step S34, for example, when the first teacher clicks on the sticky note thumbnail 221 of the second student on the assignment management screen 200b, the enlarged screen 300b shown in FIG. 7B is displayed on the display 24A of the first terminal 20A1 of the first teacher. The enlarged screen 300b is similar to the enlarged screen 300a, but when hide name 1252 is turned on (=1), the name 301 is not displayed by showing obscured characters such as "*" (asterisk) since this is the enlarged screen of the sticky note data created by the first student who is not the first teacher. Similarly, on the enlarged screen of the first terminal of the second teacher and the second terminal of the student, the names of people other than the viewers of the name 301 are not displayed.

Returning to FIG. 4A, the controller 11 determines whether or not there is an operation input for display of the correction screen from the user (teacher) via the operator 23A (step S35). The enlarged screen transitioned to from the assignment management screen 200d on the student's second terminal does not have a correction button and an acquire button. For this reason, the answer in step S35 becomes YES when the correction button 304 is clicked on the enlarged screen 300a, 300b, etc., which has been transitioned to from the assignment management screen 200a, etc., of the first terminal of the teacher. If there is an operation input for displaying the correction screen (step S35; YES), the controller 11 generates correction screen data in which the displayed sticky note of the sticky note data is corrected, and displays the data on the requesting display 24A or 24B (step S36). In step S36, for example, when the first teacher clicks on the correction button 304 on the enlarged screen 300a, the correction screen 400a shown in FIG. 8A is displayed on the display 24A of the first terminal 20A1 of the first teacher.

The correction screen 400a has a name 401, an audio input button 402, an enlarge button 403, and a sticky note display region 411. The name 401 is the name of the user who created the sticky note data currently displayed in the sticky note display region 411, based on the user name 1232 corresponding to the assignment creating user ID 1245. When hide name 1252 is turned on (=1), the name 401 displays the name of the first teacher, since the screen is an enlarged screen of the sticky note data created by the first teacher himself. The audio input button 402 is a button for accepting addition of input voice data of the user (first teacher) via the voice inputter/outputter 26A to the sticky note data in the sticky note display region 411. The enlarge button 403 is a button for accepting an instruction input for enlarging/reducing the sticky note in the sticky note display region 411. The sticky note display region 411 is a display region for the sticky note of the sticky note data displayed in the sticky note display region 311 of the enlarged screen 300a.

In step S34, for example, when the first teacher clicks on the correction button 304 on the enlarged screen 300b, the correction screen 400a shown in FIG. 8A is displayed on the display 24A of the first terminal 20A1 of the first teacher. The correction screen 400b is similar to the correction screen 400a, but when hide name 1252 is turned on (=1), the name is not displayed in the name 401 by showing obscured characters such as "*" (asterisk) since this is the correction screen of the sticky note data created by the first student who is not the first teacher. The enlarged screen 300b further includes a text input button 404, a stamp input button 405, and a handwriting input button 406. The text input button 404 is a button for accepting input of correction text to be superimposed on the sticky note in the sticky note display region 411. The stamp input button 405 is a button for accepting input of a correction stamp to be superimposed on the sticky note in the sticky note display region 411. The handwriting input button 406 is a button for accepting input of handwritten correction to be superimposed on the sticky note in the sticky note display region 411. Similarly, on the enlarged screen of the first terminal 20A2 of the second teacher, the names of people other than the viewer with the name 401 are not displayed.

Returning to FIG. 4A, the controller 11 performs a process regarding the correction screen in response to input of operation from the user (teacher) via the operator 23A (step S37). The process proceeds to step S32. Note that the sticky note data of the answer corrected on the correction screen may be configured so that a mark indicating that the correction has been completed is superimposed on the sticky note thumbnail 221 of the sticky note data on the assignment management screen after the transition to step S32. If there is no input of operation for displaying the correction screen (step S35; NO), the controller 11 performs other processing related to the enlarged screen in response to input of operation from the user (teacher or student) via the operator 23A or 23B (step S38). The process proceeds to step S32. If there is no valid input of operation for displaying the enlarged display (step S33; NO), the controller 11 performs other processing related to the assignment management screen in response to input of operation from the user (teacher or student) via the operator 23A or 23B (step S39). The submission screen display control process ends.

Next, the screen display setting change process will be described with reference to FIG. 4B. The screen display setting change process is executed in parallel with the submission screen display control. When the teacher inputs changes to the check boxes 211, 212, 213 on the assignment management screen being displayed on the first terminal via the operator 23A, the server 10 receives from the first terminal change information for the screen display setting information according to the change that is input. When the server 10 starts receiving the change information, this triggers the controller 11 to execute a screen display setting change process in accordance with the screen display setting change program 126 stored in the storage 12.

First, the controller 11 completes reception of the change information for the screen display setting information from the first terminal (step S41). Then, the controller 11 updates the screen display setting information 1250 stored in the storage 12 in accordance with the change information of the screen display setting information in step S41 (step S42). Specifically, the controller 11 sets hide answer 1251 to 1/0 in response to the on/off input of the check box 211 of the change information, sets hide name 1252 to 1/0 in response to the on/off input of the check box 212 of the change information, and sets allow student confirmation 1253 to 1/0 in response to the on/off input of the check box 213 of the change information, corresponding to the assignment creating user 1245 of the teacher who made the change. In addition, the values of the hide name 1252 and allow student confirmation 1253 of teachers other than the teacher who made the change are changed to the value of the teacher who made the change. Then, the controller 11 detects the terminal that is displaying the submission screen (assignment management screen, enlarged screen, or correction screen) among all logged-in terminals that correspond to the submission location ID and lesson ID corresponding to the assignment management screen of the first terminal that sent the data (step S43). Then, the controller 11 causes the screen display setting information 1250 updated in step S42 to be reflected on the currently displayed submission screen of the terminal displaying the submission screen, including the first terminal that is the sender (step S44). The screen display setting change process ends.

As described above, according to the present embodiment, the server 10 includes the controller 11. The controller 11 associates the names of each of the users (teachers, students) who are the plurality of members as display information with information that identifies the users and displays them on the displays 24A, 24B of the first terminals 20A1 and so on and second terminals 20B1 and so on operated by each user. When the controller 11 detects a specific operation (turning on the check box 212) by a specific user (teacher) among multiple users, the controller 11 restricts the display of the names of each user operating the first terminals 20A1 and so on, second terminals 20B1 and so on, on the displays 24A, 24B of the terminals operated by each user based on the detected specific operation. In addition, when the controller 11 detects a specific operation by the user (teacher) (turning on the check box 211, and turning off the check box 213), the controller 11 restricts the display of information (sticky note data) other than the information that specifies the user (name) who is operating the first terminal 20A1 and so on, and the second terminal 20B1 and so on, on the displays 24A and 24B of the terminals operated by the users based on the detected specific operation.

Therefore, when multiple users display or share information, the information (privacy) of each user can be protected by the operation of a user (teacher) with specific authority. For example, when using the lesson support function in lessons, if the display information to be restricted is the name, the teacher could pick out the excellent sticky note data from submitted material and explain it, or have students vote for the data they think are excellent. If the teachers and students can see everyone's names on the display screen at that time, the submitted material of the student who is usually excellent may appear to look better to the students, and it may not be possible to make the right judgment. However, the "hide name" feature can increase anonymity and encourage the members of the class to make the right decisions. This can also prevent students from making fun of the submitted material submitted from other students by mentioning the name. In addition, the operation of the screen display setting by the teacher is reflected to the screen of all participants of the lesson. This eliminates the need for the teacher to give instructions to students, reducing the teacher's burden. It is also possible to restrict the display of sticky notes on the display screen of students' terminals. It is also possible to restrict the display of sticky notes on the display screen of teachers' terminals. In this way, the interaction process between the users (the target students and the teachers in charge) and the information processing apparatus 20 can reliably assist the users in performing technical tasks (whether or not to confirm the student's name in data that identifies the student's name).

Moreover, information other than the information (name) that specifies a user is information (sticky note data) generated by each user. Therefore, by restricting the display of sticky notes on the display screen of the student's terminal, it is possible to prevent the student who is the viewer from imitating the sticky notes showing other students' answers, and to encourage them to create their own sticky note data for their answers. It is also possible to restrict the display of sticky notes on the display screen of teachers' terminals.

In addition, the setting is made so that each user belongs to a lesson ID as a common group. Therefore, when information is displayed and/or shared among multiple users in the common group, the information of each user can be protected by the operation of the user with specific authority.

In addition, the restrictions on names are that they are displayed in obscured characters. This ensures that names can be securely restricted. Note that the restriction of information such as names may be achieved by changing the display layout or position (arrangement) of the information to be restricted. For example, a layout may be used in which a display element is superimposed on the name, or the name may be arranged and displayed in a display region separate from the sticky note thumbnail.

In addition, the name restriction causes the name of the viewing user to be displayed on the terminal of that user, and restricts the display of names of users other than that user on that terminal. Therefore, only the name of the user who is currently logged in and viewing the information is displayed, so that the user can later recognize which information (sticky note data) corresponding to the user's name belongs to him or her.

According to the above description, a storage 12 such as an HDD, SSD, EEPROM or the like is used as the computer readable medium storing the program regarding the above disclosure but the embodiments are not limited to the above. As the computer-readable storage medium, a nonvolatile memory, and a portable storage medium, such as a CD-ROM, may also be used. A carrier wave is also applied as the medium to provide data of the program according to the embodiments through the communication lines.

The description of the embodiments are merely examples of the display control apparatus, display control system, display control method, and program according to the present invention, and the present invention is not limited to the above.

Although embodiments of the present invention have been described above, the scope of the present disclosure is not limited to the embodiments described above, but includes the scope of the invention described in the claims and their equivalents.

## Claims

1. A display control apparatus comprising:
a processor, wherein the processor is configured to,
display on a display of a terminal operated by each member, display information of each of a plurality of members associated with information that specifies each member, and
in a case where a specific operation by a specific member among the plurality of members is detected, based on the detected specific operation, restrict a display of the display information of the member operating the terminal or information other than the information that specifies the member on a display of the terminal operated by each member.

2. The display control apparatus according to claim 1, wherein information other than information that specifies the member is information generated by each member.

3. The display control apparatus according to claim 1, wherein each member is set to belong to a common group.

4. The display control apparatus according to claim 1, wherein a restriction of the display of the display information of the member or the information other than the information that specifies the member is performed by changing a display layout or position of restricted information, or by displaying obscured characters.

5. The display control apparatus according to any one of claims 1 to 4, wherein the processor displays on a display of a terminal of a viewing member the display information of the viewing member, and restricts the display of the display information of the member other than the viewing member on the display.

6. A display control method executed by a display control apparatus, the method comprising:
displaying on a display of a terminal operated by each member, display information of each of a plurality of members associated with information that specifies each member; and
in a case where a specific operation by a specific member among the plurality of members is detected, based on the detected specific operation, restricting a display of display information of the member operating the terminal or information other than the information that specifies the member on a display of the terminal operated by each member.

7. The display control method according to claim 6, wherein information other than information that specifies the member is information generated by each member.

8. The display control method according to claim 6, wherein each member is set to belong to a common group.

9. The display control method according to claim 6, wherein the restricting of the display of the display information of the member or the information other than the information that specifies the member is performed by changing a display layout or position of restricted information, or by displaying obscured characters.

10. The display control method according to any one of claims 6 to 9, further comprising displaying on a display of a terminal of a viewing member the display information of the viewing member, and restricting the display of the display information of the member other than the viewing member on the display.

11. A program causing a computer to perform:
displaying on a display of a terminal operated by each member, display information of each of a plurality of members associated with information that specifies each member; and
in a case where a specific operation by a specific member among the plurality of members is detected, based on the detected specific operation, restricting a display of the display information of the member operating the terminal or information other than the information that specifies the member on a display of the terminal operated by each member.

12. The program according to claim 11, wherein information other than information that specifies the member is information generated by each member.

13. The program according to claim 11, wherein each member is set to belong to a common group.

14. The program according to claim 11, wherein the restricting of the display of the display information of the member or the information other than the information that specifies the member is performed by changing a display layout or position of restricted information, or by displaying obscured characters.

15. The program according to any one of claims 11 to 14, wherein the computer displays on a display of a terminal of a viewing member the display information of the viewing member, and restricts display of the display information of the member other than the viewing member on the display.
